Europäisches Patentamt

European Patent Office

Office européen des brevets

(19)

(11) Numéro de publication: **0 010 045**

**A1**

(12) # DEMANDE DE BREVET EUROPEEN

(21) Numéro de dépôt: **79400709.6**

(22) Date de dépôt: **05.10.79**

(51) Int. Cl.³: **C 02 F 3/04**
**F 28 F 25/08, C 02 F 3/10**

(30) Priorité: **06.10.78 FR 7828641**

(43) Date de publication de la demande:
**16.04.80 Bulletin 80/8**

(84) Etats Contractants Désignés:
**AT BE CH DE GB IT LU NL**

(71) Demandeur: **Société dite MARCILLAT S.A.**
**Laiterie des Hautes Vosges**
**F-88430 Corcieux(FR)**

(72) Inventeur: **Marcillat, Robert**
**17 Rue de la Gare**
**F-88430 Corcieux(FR)**

(74) Mandataire: **Moncheny, Michel et al,**
**c/o Cabinet Lavoix 2 Place d'Estienne d'Orves**
**F-75441 Paris Cedex 09(FR)**

(54) **Appareil de réaction entre liquide et gaz, et notamment lit bactérien.**

(57) Cet appareil comporte un empilage 1 de plusieurs couches de briques perforées 3, traversées chacune d'un grand nombre de passages verticaux. Ces briques sont exactement superposées ou sont décalées latéralement, ou même angulairement, mais les passages verticaux des diverses couches sont alignés. Des orifices de passage de gaz 16, 18 sont ménagés au-dessus et au-dessous de l'empilage. Un bassin d'alimentation 8, muni d'orifices multiples 23, déverse le liquide audessus de l'empilage et une cuve d'évacuation 20 recueille le liquide traité à la partie inférieure de l'appareil.

EP 0 010 045 A1

FIG.1

FIG.3

# 1
## Appareil de réaction entre liquide et gaz, et notamment lit bactérien

La présente invention concerne un appareil de contact entre un ou plusieurs liquides et au moins un gaz, tout particulièrement destiné à être utilisé comme lit bactérien pour l'épuration des eaux résiduaires.

Il est bien connu que l'efficacité des appareils de ce type est fonction de l'étendue des surfaces de contact, liquide - gaz, et que par contre l'encombrement total de l'ensemble doit être limité, ce qui conduit à réaliser des appareils complexes, et par suite coûteux, dans lesquels le liquide parcourt des trajets sinueux à travers des passages aussi étroits que possible. Malheureusement ces passages ont tendance à se colmater de sorte que peu à peu la surface de contact diminue et en même temps l'efficacité de l'appareil.

La présente invention a pour but de résoudre ce problème en fournissant un appareil de contact liquide-gaz tout particulièrement adapté à être utilisé comme lit bactérien pour l'épuration des eaux résiduaires qui, à la fois, présente un faible encombrement et une surface de contact très étendue, soit facile et peu coûteux à fabriquer et surtout conserve son efficacité même après une utilisation prolongée.

Cette invention a en effet pour objet un appareil qui comporte, entre un bassin d'alimentation percé d'une série d'orifices de répartition de liquide et une cuve de réception et d'évacuation du liquide traité, un empilage de plusieurs couches de briques traversées chacune par un grand nombre de passages verticaux et disposées de manière que les passages des diverses couches soient alignés entre eux et forment des canaux verticaux continus isolés les uns des autres et ouverts aux deux extrémités de l'empilage, au moins un premier

2

orifice de passage de gaz entre le bassin d'alimentation et l'empilage, et au moins un second orifice de passage de gaz entre l'empilage et la cuve de réception.

Les briques sont, par exemple, en argile, en verre, en laitier de hauts fourneaux, ou en toute autre matière minérale analogue peu coûteuse, de sorte qu'elles sont faciles à fabriquer avec précision. Elles comportent de multiples passages de section rectangulaire, régulièrement répartis, qui assurent une division efficace de l'écoulement de liquide, fournissent une surface étendue de contact liquide-gaz, et se superposent étroitement les unes aux autres pour former une série de canaux verticaux parallèles.

La forme et la disposition des perforations constituant les passages des briques peuvent varier, de sorte que les briques peuvent soit être empilées directement les unes sur les autres, soit être décalées latéralement d'une couche à l'autre ou même être décalées angulairement d'une couche à l'autre. Dans tous les cas ces perforations forment des canaux verticaux continus, isolés les uns des autres de sorte que les impuretés ou bactéries qui tendent à les obturer sont automatiquement entraînées par l'effet de l'accroissement de pression qu'elles produisent.

La description ci-dessous de modes de réalisation donnés à titre d'exemples non limitatifs, et représentés aux dessins annexés, fera d'ailleurs ressortir les avantages et caractéristiques de l'invention.

Sur ces dessins :

- la fig. 1 est une vue schématique en coupe verticale d'un appareil de contact liquide-gaz suivant l'invention;

- la fig. 2 est une vue en perspective d'une brique perforée utilisée dans l'appareil de la figure 1;

- la fig. 3 est une vue en perspective montrant des briques selon une variante de réalisation;

- la fig. 4 est également une vue en perspective de briques selon une autre variante de réalisation;

- la fig. 5 est une vue schématique en perspective d'une portion d'empilage selon un mode préféré de réalisation;

- la fig. 6 est une vue en perspective d'une brique selon une autre variante de réalisation;

- la fig. 7 est une vue en perspective d'une brique porteuse évidée, selon une variante de réalisation;

- la fig. 8 est une vue en coupe verticale axiale d'un organe de réglage du débit d'un des orifices du bassin d'alimentation;

- la fig. 9 est une vue en perspective d'un organe de réglage de débit selon une variante de réalisation.

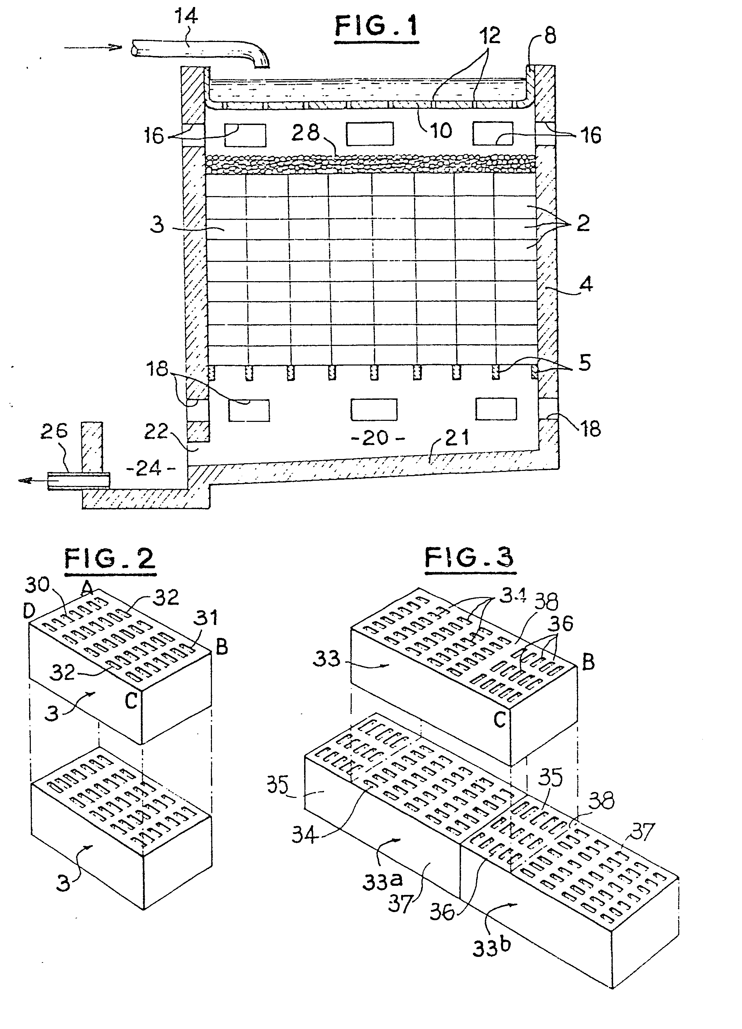

Suivant un premier mode de réalisation préféré représenté sur la figure 1, un appareil de contact liquide-gaz selon l'invention comporte un empilage de plusieurs couches 2 de briques 3 perforées et rectifiées sur f a c e s coupées, qui sont posées les unes sur les autres, ni maçonnées, ni hourdies mais simplement appareillées. Cet empilage est placé à l'intérieur de murs extérieurs 4 qui l'entourent sur toute sa périphérie et il repose à sa partie inférieure sur des poutres 5 ancrées à leurs extrémités sur ces murs extérieurs. Les murs extérieurs 4 se prolongent de part et d'autre de l'empilage 1. A la partie supérieure de celui-ci ils entourent un bassin 8 d'alimentation, dont le fond 10 est percé d'un grand nombre d'orifices 12 répartis sur toute sa surface. Au moins une canalisation 14 assure le remplissage du bassin 8 en liquide à traiter.

Entre le fond 10 du bassin 8 et la partie supérieure de l'empilage 1 les murs extérieurs sont percés d'au moins une ouverture ou fenêtre 16 en communication avec l'extérieur ou avec un circuit de gaz approprié.

4

l'extrémité opposée de l'empilage, c'est-à-dire en-dessous des poutres 5, les murs 4 sont également percés d'au moins une ouverture 18 en communication avec ce même circuit de gaz, c'est-à-dire éventuellement l'air ambiant. En dessous de ces ouvertures 18 l'appareil comporte une cuve 20 de réception du liquide traité, dont le fond 21 est horizontal ou de préférence en pente douce, et qui communique par un orifice 22 avec un puisard 24 d'où part une canalisation 26 d'évacuation du liquide traité.

De préférence, une couche 28 de graviers, ou d'autres éléments de répartition analogues, est déposée sur la face supérieure de l'empilage 1 entre celle-ci et les ouvertures 16 Quelle que soit leur nature, ces graviers ou autres éléments ont des dimensions transversales supérieures à la dimension intérieure des perforations des briques 3.

Dans le mode de réalisation représenté, les briques 3 sont toutes identiques et son disposées directement les unes sur les autres en colonnes verticales accolées. Comme le montre la figure 2, chacune des briques comporte de préférence des passages allongés de section rectangulaire, qui la traversent verticalement de part en part. Les passages 30, qui sont tous identiques, ont leurs grands côtés disposés parallèlement aux grands côtés A,B de la brique 3. En outre les passages 30 forment une série de rangées identiques 32, parallèles à ces grands côtés A,B de la brique 3 et régulièrement espacées les unes des autres, de sorte que les lignes 31 de perforations successives, parallèles aux petits côtés B,C sont également toutes identiques. Chaque brique comporte ainsi un nombre de passages important, dont la surface interne est étendue ce qui leur permet de fournir une surface utile importante par rapport au volume de la brique elle-même. Dans l'exemple de réalisation

5

représenté, les briques 3 étant toutes identiques, fabriquées avec précision et empilées directement les unes
au-dessus des autres, les passages 30 des briques successives sont alignés et constituent des canaux verticaux
indépendants et étanches allant de la partie supérieure à la
partie inférieure de l'empilage 1, sans interruption.

Lorsque du liquide, par exemple des eaux résiduaires à traiter, est amené par la canalisation 14 dans
le bassin d'alimentation 8, ce liquide s'écoule en un
grand nombre de jets dispersés dans l'espace entre ce
bassin et la couche de graviers 28, puis après s'être
divisé en traversant cette couche 28 il s'écoule librement par les canaux verticaux constitués par la succession des passages 30. Il descend ainsi de couche en
couche jusqu'à l'extrémité inférieure de cet empilage
et tombe dans la cuve de réception 20. Le liquide traité
recueilli dans cette cuve est ensuite évacué par le puisard 24 et la canalisation 26.

Pendant son trajet descendant le liquide à traiter
est maintenu sous une forme très divisée, constituée par
des gouttelettes ou des lames minces, et est en contact
d'une part avec la surface interne des canaux verticaux
et, d'autre part, avec l'air ou le gaz circulant entre
les ouvertures 18 et les ouvertures 16 des murs extérieurs 4. L'étendue des surfaces de contact liquide-gaz
est donc extrêmement importante, de sorte que des échanges thermiques ou des réactions chimiques ou biologiques
entre liquide et gaz peuvent facilement intervenir au
cours de ce déplacement.

Le sens de circulation du gaz entre les ouvertures
16 et 18 est fonction des différences de température
entre liquide et gaz. Cette circulation peut être accélérée par des moyens appropriés disposés à l'extérieur
de l'appareil. Toutefois, lorsque l'appareil est destiné
à être utilisé comme lit bactérien, les ouvertures 16

6

et 18 sont simplement ouvertes à l'atmosphère et la circulation d'air est provoquée par la différence de température entre liquide et air ou accélérée par le vent. Dans ce cas les eaux à traiter, mélangées à des boues actives déversées dans le bassin d'alimentation 8, sont divisées par la traversée des orifices 12 et mises en contact avec l'air ambiant à la sortie de ces orifices par leur passage à proximité des ouvertures 16. Au cours du ruissellement des eaux dans les canaux verticaux 30 des briques 3, les micro-organismes contenus dans ces eaux se fixent sur les parois de ces canaux qui constituent un support extrêmement approprié. En outre ces eaux restent continuellement en contact avec l'air et sont efficacement oxygénées grâce à la circulation de l'air entre les ouvertures 18 et 16. Les boues ainsi formées sont progressivement entraînées par la pression des eaux qui continuent à s'écouler dans les canaux verticaux et peuvent être recueillies, par exemple par décantation, à la sortie du puisard 24.

Les briques munies de perforations de section rectangulaire, telles que la brique 3, peuvent facilement être réalisées en argile par extrusion puis cuisson d'une pâte de cette matière. On obtient ainsi, à partir d'une matière première très abondante et très économique, des briques de forme précise dont les surfaces supérieure et inférieure peuvent être avantageusement meulées simultanément à leur sortie du four, ce qui assure à la fois le bon contact et la bonne étanchéité entre briques superposées, et une hauteur régulière des briques dont chaque couche présente ainsi des surfaces planes sans dénivellation. Ces briques peuvent avoir des hauteurs de plusieurs décimètres et comporter des passages verticaux 30, de section rectangulaire, séparés par des parois dont l'épaisseur ne dépasse pas un centimètre. Par suite l'empilage offre une surface utile de 100 $m^2$ par mètre cube, ce qui permet la réalisation d'un lit bactérien extrêmement efficace et économique.

Selon une variante les briques peuvent également être obtenues par moulage d'un agrégat de laitier de haut fourneau expansé. Cette matière première, qui est également abondante et peu coûteuse, est fondue et déversée dans un bassin rempli d'eau. Le produit obtenu, vitrifié et poreux, est concassé puis aggloméré, par exemple avec du ciment, et moulé dans des machines automatiques avec une grande précision. Même si elles comportent des parois d'une épaisseur supérieure à un centimètre, les briques perforées de ce type présentent, grâce à la porosité du laitier expansé, une efficacité comparable à celle des briques en argile cuite et permettent également une fabrication économique.

Bien entendu la forme et la disposition des perforations ou passages 30 ménagés dans les briques 3 peuvent varier selon les utilisations de l'appareil. De préférence les lignes 31 et rangées 32 de perforations 30 sont disposées de manière que l'ensemble des passages ait une configuration symétrique par rapport aux plans médians verticaux de la brique, parallèles respectivement aux grands côtés D,C et aux petits côtés B,C. De cette manière les briques 3 peuvent être empilées directement les unes sur les autres sans tenir compte de leur orientation, ce qui facilite grandement la manipulation des briques et le montage de l'empilage 1.

Des briques de ce type peuvent en outre être décalées latéralement les unes par rapport aux autres d'une distance correspondant à une ou plusieurs lignes 31, de manière à se chevaucher et à donner à l'empilage une solidité plus grande. Bien entendu les passages 30 des briques des couches successives continuent à être alignés avec des passages 30 identiques pour constituer des canaux verticaux continus ouverts aux deux extrémités de l'empilage. Les extrémités de certaines couches

8

comportent alors des portions de brique en contact avec les murs extérieurs 4.

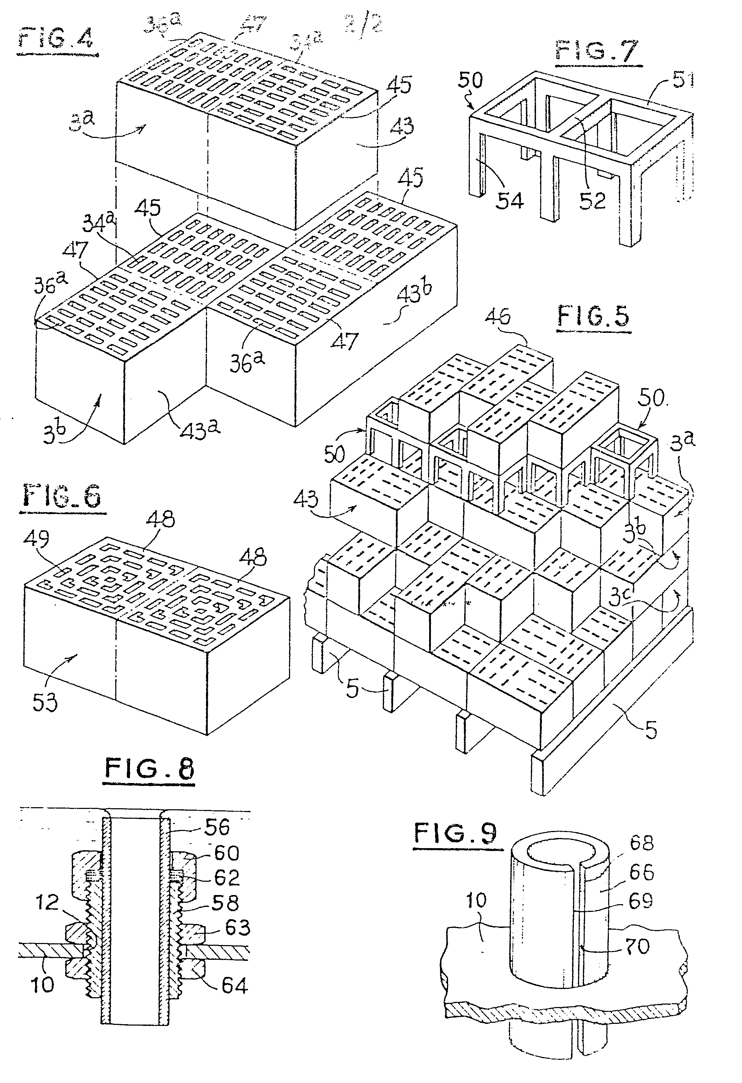

Selon une variante représentée sur la figure 3, pour faciliter ce type d'empilage dans lequel les briques sont décalées latéralement les unes par rapport aux autres, on utilise de préférence des briques 33 qui comportent deux types de passages verticaux, respectivement 34 et 36. Les passages verticaux 34 sont identiques aux passages 30 et disposés de la même manière. Par contre les passages 36, qui ont une forme analogue aux passages 34 et également une section rectangulaire, sont disposés perpendiculairement à ceux-ci c'est-à-dire que leur grande dimension est parallèle aux petits côtés B,C de la brique 33, tandis que leur petite dimension correspond aux grands côtés A,B ou C,D, ces passages 36 étant, de la même manière que les passages 34, répartis sur des rangées et des lignes régulièrement espacées et identiques entre elles. La brique 33 est ainsi divisée en deux parties 35,37 qui comportent deux types de passages différents. Pour réaliser un empilage dans lequel les briques des couches successives sont décalées latéralement, il suffit de placer la brique 33 au-dessus de deux briques identiques adjacentes, 33a et 33b, orientées en sens inverse de la brique 33 de manière que les passages 34 de la brique 33 correspondent aux passages 34 de la brique 33a, tandis que les passages 36 de la brique 33 se trouvent exactement superposés aux passages 36 de la brique 33b. L'empilage 1 comporte alors une succession de couches 3 dans lesquelles les briques 33 sont alternativement dans un sens puis dans l'autre et sont décalées les unes par rapport aux autres, ce qui renforce la solidité de l'ensemble sans modifier l'efficacité de l'appareil obtenu ni augmenter son coût.

Les briques 33, 33a et 33b représentées sur la figure 3 comportent deux parties 35, 37 de dimensions inégales, mais l'on peut facilement multiplier les pos-

9

sibilités d'empilage. C'est ainsi qu'une variante particulièrement avantageuse de l'invention comporte des briques telle que les briques 43, 43a et 43b représentées sur la figure 4, qui sont divisées en deux parties égales 45 et 47, comportant chacune une série de perforations 34a, 36a et séparées, comme les parties 35 et 37, par une cloison 38 dont l'épaisseur est supérieure à celle des cloisons qui séparent les passages entre eux et est sensiblement le double de celle de la paroi extrême de la brique. Les perforations 34a et 36a des deux parties 45 et 47 étant perpendiculaires entre elles, chacune des briques 43 peut être empilée sur deux briques qui lui sont parallèles mais sont orientées en sens inverse, de la même manière que la brique 33 sur les briques 33a et 33b, ou sur deux briques 43a, 43b qui lui sont perpendiculaires, comme représenté sur les figures 4 et 5. Les perforations 36a de la moitié 47 de la brique 43 sont en effet exactement superposables aux perforations 34a de la seconde partie 45 de la brique 43a, tandis que les perforations 34a de cette même brique 43 sont superposables aux perforations 36a de la partie 47 de la brique 43b. Par suite, l'empilage 1 peut facilement être constitué par des couches successives 3a et 3b dans lesquelles les briques sont perpendiculaires les unes aux autres. En effet, comme le montrent les figures 4 et 5, chaque brique 43 de la couche 3a est à cheval sur deux briques 43a et 43b de la couche directement inférieure, qui sont disposées perpendiculairement à la brique 43. De cette manière la partie 45 de la brique 43 repose sur la portion 47 de la brique 43b, tandis que la portion 47 de la brique 43 repose sur la portion 45 de la brique 43a, les perforations 34a et 36a des diverses couches étant alternativement superposées. De la même manière les briques 43a et 43b de la couche 3b sont superposées à des briques identiques qui leur sont perpendiculaires, c'est à-dire qui sont parallèles aux briques 43 de la couche

10

3a, et ainsi de suite sur toute la hauteur de l'empilage 1.

Selon une autre variante, qui facilite encore
l'empilage, on utilise des briques telles que celle
représentée à la figure 6, dont les deux moitiés sont
elles-mêmes superposables quelle que soit leur orientation. Les deux moitiés 48 de cette brique 53 comportent
en effet deux séries identiques de perforations 49 disposées selon des carrés successifs régulièrement espacés
les uns à l'intérieur des autres, autour d'un point central. De telles briques peuvent être superposées parallèlement ou perpendiculairement les unes aux autres,
quelle que soit leur orientation.

Bien entendu la hauteur et les dimensions de l'empilage 1 ainsi que celles des ouvertures de circulation
d'air 16 et 18 dépendent de l'application de l'appareil
et de la nature du liquide à traiter. Dans certains cas
il peut être avantageux de faciliter l'écoulement du gaz
en créant des ouvertures dans une partie intermédiaire
de l'empilage. On utilise alors de préférence des briques
porteuses évidées, telles que la brique 50 représentée
sur la figure 7. Cette brique, dont la dimension extérieure correspond exactement à celle des autres briques
3, 33, 43 ou 53, comporte un évidement correspondant à
chacun des ensembles de perforations. Par suite, sa face
supérieure est limitée à un cadre rectangulaire muni
d'une traverse 52; six pieds 54 partent de ce cadre 51,
à chaque coin de ce dernier et dans la partie centrale
correspondant à la traverse 52. La présence d'une ou
plusieurs briques porteuses 50 dans l'empilage 1 ne
modifie nullement la forme et la disposition de cet empilage. En conséquence les briques porteuses 50 peuvent
constituer, comme représenté sur la figure 5, une couche
complète de briques et former ainsi un passage horizontal
pour la circulation du gaz et une interruption entre les

11

canaux verticaux des couches supérieures et ceux des couches inférieures. Des briques porteuses 50 peuvent également être disposées en une pile continue pour constituer une cheminée verticale facilitant la circulation du gaz ou selon toute autre disposition appropriée.

Il peut également être avantageux de remplacer les poutres 5 par un empilement de briques porteuses 50 appuyées sur le fond de la cuve de réception 20 et supportant la totalité de l'empilage 1. Les briques 50 étant évidées, la communication entre la cuve de réception 20, l'espace en-dessous de l'empilage 1 et le circuit de gaz n'est nullement gênée par cette disposition. Par ailleurs les murs 4 n'ont plus besoin d'être porteurs, ils peuvent être allongés ou supprimés,les briques extrêmes de chaque couche constituant par leur superposition les parois extérieures de l'appareil.

De la même manière, à la partie supérieure de l'empilage 1 le bassin 8 peut être supporté par un empilement de briques porteuses évidées 50, en communication avec les ouvertures 16. La couche 28 de graviers, ou analogues, est alors placée à l'intérieur de la première couche de briques 50, entre les pieds 54 de ces briques. La couche 28 peut occuper la totalité de l'espace entre les pieds 54 ou seulement une partie de celle-ci.

Bien entendu les briques porteuses 50 peuvent être réalisées dans le même matériau que les briques de l'empilage 1, mais elles peuvent également être réalisées en un matériau de résistance mécanique supérieure, tel que le béton ou même éventuellement du métal. En effet, ces briques supportent un poids relativement important sur une section réduite. A la partie supérieure de l'appareil la répartition du liquide provenant de la canalisation 14 dans les divers orifices 12 du fond 10 du bassin 8 est, de préférence, améliorée par la présence d'un organe de réglage de débit dans chacun des orifices

12

12. Un premier mode de réalisation d'un tel organe de réglage de débit est représenté sur la figure 8. Cet organe comporte un tube 56, immobilisé dans un manchon fileté extérieurement, 58, par un écrou 60 serrant une rondelle en caoutchouc 62 entre lui, le tube 56 et l'extrémité du manchon 58 et jouant ainsi le rôle de presse-étoupe. Le tube 56 est plus long que le manchon 58 et peut coulisser axialement avec faible jeu à l'intérieur de ce manchon 58, lorsque l'écrou 60 est légèrement desserré et cesse de comprimer la rondelle 62, de sorte que la position du tube 56 par rapport au manchon 58 peut être réglée. Le manchon 58 est fixé dans l'orifice 12 du fond 10 du bassin 8 au moyen de deux écrous 63 et 64 fixés de part et d'autre du bord de l'orifice 12 et vissés sur le manchon fileté 58.

Il est clair qu'un réglage de la position du tube 56 dans le manchon 58 permet de régler la hauteur de l'extrémité de ce tube par rapport au fond 10 du bassin 8. Le débit de liquide est le même dans tous les orifices 12 et le liquide contenu dans le bassin 8 est divisé de manière régulière sur toute la surface du fond de ce bassin.

Selon une variante de réalisation représentée sur la figure 9, l'ensemble du manchon 58 et du tube 56 est remplacé par un simple tube 66 en matière élastique ou plastique, qui est fendu sur toute sa hauteur le long d'une génératrice et présente ainsi une fente longitudinale 68. Le diamètre du tube 66 est légèrement supérieur à celui de l'orifice 12 du bassin 8, mais la fente a une largeur suffisante pour qu'une compression du tube 66 rapprochant les bords 69 et 70 de la fente réduise suffisamment les dimensions du tube 66 pour permettre son coulissement dans l'orifice 12. Par suite le tube 66, comprimé latéralement, est aisément introduit dans l'orifice 12 jusqu'à la profondeur désirée, le relâchement de la compression suffisant à bloquer ce tube dans l'ori-

13

fice. La position d'un tel tube 66 peut, par ailleurs, être réglée chaque fois qu'on le désire en exerçant à nouveau une compression latérale qui rapproche les bords de la fente 68 et réduit la dimension du tube, puis en relâchant cette compression pour bloquer le tube dans l'orifice 12.

On dispose ainsi d'un appareil dans lequel le ou les liquides à traiter sont répartis et finement divisés par leur passage à travers les orifices 12, puis entrent en contact avec le gaz circulant dans les ouvertures 16 et restent en contact avec ce gaz au cours de passages dans des canaux indépendants, étroits et nombreux qui assurent une grande étendue de contact liquide-gaz. La réalisation d'un tel appareil n'entraîne que des frais relativement peu élevés, de sorte que l'appareil peut avoir des dimensions importantes et être utilisé dans toutes sortes d'applications et tout particulièrement pour la réalisation des lits bactériens d'épuration des eaux résiduaires. Son fonctionnement est sûr et conserve toute son efficacité pendant une durée prolongée, car les risques de colmatage partiel ou total des passages de fluide sont pratiquement éliminés, les canaux se débouchant automatiquement. Bien entendu lorsque l'appareil doit présenter des dimensions importantes le bassin d'alimentation 8 peut être remplacé par un certain nombre de bassins accolés recouvrant la totalité de la surface supérieure de l'empilage 1 et alimentés par un certain nombre de canalisations 14, éventuellement munies de robinets de réglage de débit.

On peut aussi remplacer le bassin 8 et les orifices à débit réglable par un dispositif d'arrosage sous pression comportant un ou plusieurs distributeurs rotatifs. Mais la pression nécessaire au bon fonctionnement de ces distributeurs entraîne un supplément de consommation d'énergie et une augmentation de la dépense de fonctionnement de l'appareil.

14

R E V E N D I C A T I O N S

1. Appareil de contact liquide-gaz et notamment lit bactérien pour l'épuration des eaux résiduaires, caractérisé en ce qu'il comporte, entre un bassin d'alimentation percé d'un certain nombre d'orifices de répartition du liquide et une cuve de réception et d'évacuation du liquide traité, un empilage de plusieurs couches de briques traversées chacune par un grand nombre de passages verticaux et disposées de manière que les passages des diverses couches soient alignés entre eux et forment des canaux verticaux indépendants ouverts aux deux extrémités de l'empilage, au moins un premier orifice de passage de gaz entre le bassin d'alimentation et l'empilage, et un second orifice de passage de gaz entre l'empilage et la cuve de réception.

2. Appareil suivant la revendication 1, caractérisé en ce que les briques comportent des passages de section rectangulaire qui les traversent de part en part.

3. Appareil suivant l'une des revendications 1 et 2, caractérisé en ce que les briques sont en argile extrudée et cuite.

4. Appareil suivant l'une des revendications 1 et 2, caractérisé en ce que les briques sont en matière minérale moulée ou agglomerée.

5. Appareil suivant l'une des revendications 1 à 4, caractérisé en ce que les faces supérieure et inférieure des briques sont meulées simultanément.

6. Appareil suivant l'une des revendications précédentes, caractérisé en ce que les passages verticaux de chaque brique sont disposés de manière symétrique par rapport aux deux plans verticaux médians de la brique.

7. Appareil suivant l'une des revendications précédentes, caractérisé en ce que les briques étant toutes identiques, sont empilées directement les unes sur les autres.

8. Appareil suivant l'une des revendications précédentes, caractérisé en ce que les briques de chaque couche sont disposées à cheval sur les briques de la couche directement inférieure.

9. Appareil suivant l'une des revendications 1 à 8, caractérisé en ce que les passages verticaux de chaque brique sont répartis en deux groupes distincts, séparés l'un de l'autre par une cloison plus épaisse que celle qui sépare deux passages adjacents.

10. Appareil suivant la revendication 9, caractérisé en ce que chaque brique ayant une longueur double de sa largeur comporte deux groupes de passages verticaux identiques mais perpendiculaires l'un à l'autre, de sorte que les passages d'un groupe de cette brique peuvent être directement superposés à ceux de l'autre groupe d'une autre brique orientée perpendiculairement à la première les groupes de passages verticaux des briques, orientés dans un premier sens et dans un deuxième sens perpendiculairement au premier, formant un damier sur chaque couche de l'empilage.

11. Appareil suivant la revendication 9, caractérisé en ce que chaque brique ayant une longueur double de sa largeur comporte deux groupes de passages verticaux identiques, ayant un pas carré tel que les passages d'un groupe peuvent être directement superposés à ceux de l'autre groupe, quelle que soit son orientation.

12. Appareil suivant l'une des revendications précédentes, caractérisé en ce qu'il comporte au moins une brique porteuse, évidée dans toute la partie correspondant aux passages verticaux, mais munie de pieds correspondant aux lignes de jonction entre les briques, ces briques porteuses étant intercalées entre des briques de l'empilage.

13. Appareil suivant la revendication 12, caractérisé en ce qu'il comporte au moins une couche de briques porteuses à la partie supérieure ou à la partie infé-

16

rieure de l'empilage, entre cet empilage et le bassin d'alimentation et/ou entre le fond de la cuve de réception et l'empilage.

14. Appareil suivant l'une des revendications précédentes, caractérisé en ce que chacun des orifices du fond du bassin d'alimentation est muni d'un organe de réglage du débit comportant un tube réglable en hauteur et maintenu de manière étanche dans un manchon supporté par le fond du bassin.

15. Appareil suivant l'une des revendications 1 à 13, caractérisé en ce que chaque orifice du bassin d'alimentation est muni d'un organe de réglage de débit constitué par un tube fendu, en matière relativement élastique, introduit par compression dans l'orifice du bassin et immobilisé élastiquement à la hauteur désirée dans celui-ci.

FIG.1

FIG.2

FIG.3

**FIG.4**

**FIG.7**

**FIG.6**

**FIG.5**

**FIG.8**

**FIG.9**

## DOCUMENTS CONSIDERES COMME PERTINENTS

| Catégorie | Citation du document avec indication, en cas de besoin, des parties pertinentes | Revendication concernee |
|---|---|---|
| X | FR - A - 443 127 (DEUTSCHE FILTER-COMPAGNIE) <br> * Page 1, ligne 33 - page 2, ligne 39; figures * <br><br> -- | 1,4,6,7 |
| | FR - A - 2 313 111 (SEGHERS ENGINEERING) <br> * Page 6, ligne 34 - page 8, ligne 18; figures * <br><br> -- | 1,9 |
| A | US - A - 2 874 844 (E.F. WANNER) | |
| A | GB - A - 29 032 AD 1909 (J.P. GUY et al.) | |
| A | FR - A - 1 080 262 (SOCIETE D'EQUATION) | |
| A | FR - A - 2 340 909 (OMNIUM D'ASSAINISSEMENT) | |
| A | GB - A - 8590 AD 1908 (Ch.L. STIFF) | |
| A | CH - A - 155 358 (A.DROZ) <br><br> ---- | |

**CLASSEMENT DE LA DEMANDE (Int. Cl. 3)**

C 02 F   3/04
F 28 F 25/08
C 02 F   3/10

**DOMAINES TECHNIQUES RECHERCHES (Int. Cl. 3)**

C 02 F   3/04
F 28 F 25/08
C 02 F   3/10

**CATEGORIE DES DOCUMENTS CITES**

X: particulièrement pertinent

A: arriere-plan technologique

O: divulgation non-ecrite

P: document intercalaire

T: theorie ou principe a la base de l'invention

E: demande faisant interférence

D: document cite dans la demande

L: document cite pour d'autres raisons

&: membre de la même famille, document correspondant

Le present rapport de recherche a ete etabli pour toutes les revendications

| Lieu de la recherche | Date d'achevement de la recherche | Examinateur |
|---|---|---|
| La Haye | 09-01-1980 | TEPLY |

OEB Form 1503.1   06.78